# EUROPÄISCHE PATENTSCHRIFT

(11) **EP 1 266 876 B1**
(45) Veröffentlichungstag und Bekanntmachung des Hinweises auf die Patenterteilung: **21.08.2013**
(21) Anmeldenummer: 02012857.5
(22) Anmeldetag: 11.06.2002
(51) Int. Cl.: C04B 26/02, C04B 14/24

(54) **Kunstharzmörtel**
Synthetic resin mortar
Mortier en matière synthétique

(30) Priorität: 16.06.2001 DE 10129134
(43) Veröffentlichungstag der Anmeldung: 18.12.2002
(73) Patentinhaber: Ries, Ernst, 36154 Hosenfeld (DE)
(72) Erfinder: Ries, Ernst, 36154 Hosenfeld (DE)
(74) Vertreter: Hebing, Norbert

(56) Entgegenhaltungen:
- WO-A-01/92180
- DE-A1- 2 631 467
- DE-B1- 2 345 033
- GB-A- 503 539
- US-A- 3 967 429
- DATABASE WPI Week 199742 Derwent Publications Ltd., London, GB; AN 1997-453796 XP002439575 & JP 09 208283 A (MITSUI SEKKA SANSHI KK) 12. August 1997 (1997-08-12)

## Beschreibung

Die Erfindung betrifft einen Mörtel, welcher Feststoffe mit einer einheitlichen Sieblinie, Kunstharz und einen Härter enthält. Weiterhin betrifft die Erfindung ein Verfahren zur Herstellung eines solchen Mörtels.

Kunstharzmörtel wird bisher üblicherweise aus Quarzsand hergestellt. Die Feststoffe aus Quarz sind dabei weitgehend rund ausgebildet. Dadurch können sie leicht aufeinander gleiten, was dazu führt, dass der Mörtel gut verarbeitbar ist. Um diesen Effekt zu verstärken, benutzt man häufig einen Festkörperzusatz, der aus Mikroglaskugeln besteht.

Nachteilig bei Kunstharzmörtel ist es, dass die Verarbeitungswerkzeuge relativ rasch verkleben und deshalb mit viel Aufwand gereinigt werden müssen. Hierzu verwendet man bei Epoxidharzmörtel Nitroverdünnung, was zu ökologischen Belastungen führt.

Der Erfindung liegt das Problem zugrunde, einen Kunstharzmörtel der eingangs genannten Art so zu verbessern, dass die bei seiner Verarbeitung verwendeten Werkzeuge möglichst wenig verunreinigt werden und möglichst gut zu reinigen sind. Weiterhin soll ein Verfahren zur Herstellung eines solchen Mörtels geschaffen werden.

Das erstgenannte Problem wird erfindungsgemäß dadurch gelöst, dass die Feststoffe zumindest teilweise scharfkantig und zumindest teilweise stabförmig ausgebildet sind.

Durch solche scharfkantigen Festkörper verkleinert sich die Fläche des Mörtels, mit der dieser die Werkzeuge berührt.

Dadurch lässt er sich viel einfacher vom Werkzeug entfernen als ein Mörtel ohne solche scharfkantigen Festkörper. Dank der Erfindung vergrößern sich die Reinigungsintervalle der Werkzeuge beträchtlich. Durch die stabförmigen Feststoffe ergibt sich eine besonders hohe Stellfähigkeit des Mörtels. Durch solche länglichen Strukturen wird in einem besonders hohen Maße verhindert, dass die Festkörper aufeinander gleiten. Sie verbinden sich vielmehr haken- und brückenartig, so dass an eine senkrechte Wand aufgetragener Mörtel weniger dazu neigt, an der Wand nach unten zu rutschen.

Als scharfkantige Feststoffe könnten beispielsweise Granitkörner oder Metallspäne verwendet werden. Besonders gering haftet der Kunstharzmörtel an Werkzeugen, wenn gemäß einer Weiterbildung der Erfindung die Feststoffe des Festkörperzusatzes aus geschreddertem oder gemahlenem Glas bestehen.

Das zweitgenannte Problem, nämlich die Schaffung eines Verfahrens zur Herstellung eines Kunstharzmörtels, bei welchem einer Festkörpermasse aus weitgehend runden Festkörpern zur Verbesserung der Verarbeitbarkeit und zur Verminderung des Klebens an Werkzeugen ein Festkörperzusatz zugemischt wird, wird erfindungsgemäß dadurch gelöst, dass die Feststoffe des Festkörperzusatzes scharfkantig und zumindest teilweise stabförmig ausgebildet sind und ihr Querschnitt der Sieblinie der Feststoffe der übrigen Feststoffmasse entspricht. Durch ein solches Verfahren kann man handelsüblichen Kunstharzmörtel durch Festkörperzusätze nachträglich in den erfindungsgemäßen Mörtel umwandeln, der sich durch eine besonders hohe Stellfähigkeit und eine besonders geringe Neigung auszeichnet, an Werkzeugen zu kleben, so dass sich die erforderlichen Reinigungsintervalle für die Werkzeuge erhöhen.

## Patentansprüche

1. Kunstharzmörtel, welcher Feststoffe mit einer einheitlichen Sieblinie, Kunstharz und einen Härter enthält, **dadurch gekennzeichnet, dass** die Feststoffe zumindest teilweise scharfkantig und zumindest teilweise stabförmig ausgebildet sind.

2. Kunstharzmörtel nach Anspruch 1, **dadurch gekennzeichnet, dass** die Feststoffe zumindest teilweise aus geschreddertem oder gemahlenem Glas bestehen.

3. Verfahren zur Herstellung eines Kunstharzmörtels, bei welchem einer Festkörpermasse aus weitgehend runden Festkörpern zur Verbesserung der Verarbeitbarkeit und zur Verminderung des Klebens an Werkzeugen ein Festkörperzusatz zugemischt wird, **dadurch gekennzeichnet, dass** die Feststoffe des Festkörperzusatzes scharfkantig und zumindest teilweise stabförmig ausgebildet sind und ihr Querschnitt der Sieblinie der Feststoffe der übrigen Feststoffmasse entspricht.

## Claims

1. A synthetic resin mortar containing solids with a uniform grading curve, synthetic resin and a curing agent, **characterized in that** the solids are at least partially sharp-edged and at least partially rodshaped.

2. The synthetic resin mortar according to claim 1, **characterized in that** the solids consist at least in part of shredded or ground glass.

3. A method for producing a synthetic resin mortar, wherein, to improve workability and to reduce adhesion to tools, a solid additive is added to a solid mass formed from largely round solids, **characterized in that** the solids in the solid additive are sharp-edged and at least partially rod-shaped and their cross section corresponds to the grading curve of the solids in the rest of the solid mass.

## Revendications

1. Mortier en résine synthétique qui contient des solides d'une courbe granulométrique homogène, de la résine synthétique et un durcisseur, **caractérisé en ce que** les solides sont conçus avec au moins en partie des arêtes vives et au moins en partie en forme de tiges.

2. Mortier en résine synthétique selon la revendication 1, **caractérisé en ce que** les solides sont constitués au moins en partie de verre déchiqueté ou broyé.

3. Procédé de fabrication d'un mortier en résine synthétique, lors duquel pour améliorer la faculté de mise en oeuvre et pour réduire l'adhérence à des outils, on mélange avec une masse de solides constituée de solides majoritairement ronds un supplément de solides, **caractérisé en ce que** les solides du supplément de solides sont conçus avec au moins en partie des arêtes vives et au moins en partie en forme de tiges et **en ce que** leur section transversale correspond à la courbe granulométrique des solides de la masse de solides restante.
